Europäisches Patentamt

(19) European Patent Office

Office européen des brevets

(11) Publication number: **0 079 661**
**B1**

(12) **EUROPEAN PATENT SPECIFICATION**

(45) Date of publication of patent specification: **24.10.84**

(21) Application number: **82201441.1**

(22) Date of filing: **15.11.82**

(51) Int. Cl.³: **H 04 N 5/32, H 04 N 5/21**

(54) **Device for generating differentially enhanced images.**

(30) Priority: **18.11.81 NL 8105223**

(43) Date of publication of application:
**25.05.83 Bulletin 83/21**

(45) Publication of the grant of the patent:
**24.10.84 Bulletin 84/43**

(84) Designated Contracting States:
**BE DE FR GB IT NL SE**

(56) References cited:
**DE-C-3 018 129**
**US-A-4 291 333**

**IEEE TRANSACTIONS ON CONSUMER ELECTRONICS, vol. CE-24, no. 3, August 1978, pages 267-271, New York (USA); S. MAKINO et al.: "A fully automatic ghost canceller"**

(73) Proprietor: **N.V. Philips' Gloeilampenfabrieken**
**Groenewoudseweg 1**
**NL-5621 BA Eindhoven (NL)**

(72) Inventor: **Verhoeven, Leonardus A. J.**
**INT. OCTROOIBUREAU B.V. Prof. Holstlaan 6**
**NL-5656 AA Eindhoven (NL)**

(74) Representative: **Faessen, Louis Marie et al**
**INTERNATIONAAL OCTROOIBUREAU B.V. 6**
**Prof. Holstlaan**
**NL-5656 AA Eindhoven (NL)**

Courier Press, Leamington Spa, England.

## Description

The invention relates to a device for the generation of differentially enhanced images, comprising an image-forming device for providing sequences of images which are sub-divided into pixels, a memory for storing image information relating to each pixel, a subtraction circuit for subtracting image information relating to each pixel from predetermined image information relating to a corresponding pixel from previous image, and a display device for displaying the image information relating to each pixel which is determined *via* the subtraction circuit, the memory forming, in conjunction with at least one multiplier circuit and one adder circuit, a recursive filter for filtering in the time domain, image information relating to each pixel of images which succeed one another in time.

Such a device for generating differentially enhanced images is known from Netherlands Patent Application No. 79 05611. The display device of such a device displays a differential image derived from the last image formed and a weighted sum of the preceding images. When the image information of such images contains noise, as is the case in an X-ray television examination device, the differential image derived therefrom will also have a "noise content" which is determined mainly by the noise content of the last image formed. This is because the noise content of the weighted sum of the preceding images will be the weighted sum of the noise content of these images which may be considered as an integration with respect to time of noise relating to each pixel. Integration of this noise will produce a noise signal having a lower amplitude.

It is the object of the invention to provide a device for generating differentially enhanced images whose noise content is substantially reduced. To achieve this, the device for generating differentially enhanced images in accordance with the invention is characterized in that it comprises a second recursive filter which comprises a memory, at least one multiplier and one adder circuit, the differentially enhanced image being formed from the difference between first and second weighted sums of successive images, said first and second sums being stored in the memory of the first and the second recursive filter, respectively.

A device of this kind offers the advantage that the noise content of the differential image is not directly dependent on the noise content of the last image generated; instead it will be determined by the difference between the noise contents of the two weighted sums of images. As has already been stated, the noise content of each weighted sum will be the time integral of the noise relating to each pixel, which will be less. The difference between the noise contents of the two weighted sums will therefore be small, and this will have a favourable effect on the signal-to-noise ratio of the image information derived for each pixel of the differential image.

The invention will be described in detail hereinafter with reference to the drawing which shows some embodiments; therein:

Figure 1 shows a device for generating differentially enhanced images according to the present state of the art;

Figure 2 shows a device for generating differentially enhanced images in accordance with the invention, and

Figure 3 shows a preferred embodiment of a device in accordance with the invention.

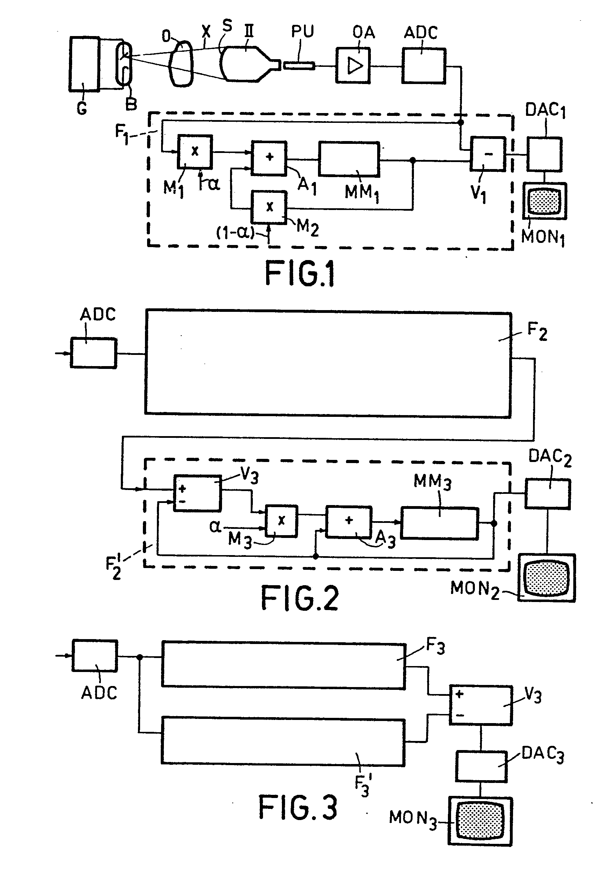

The X-ray examination device shown in Figure 1 comprises a high-voltage source G for supplying an X-ray tube B, an image intensifier II, a pick-up tube P.U., an amplifier O.A., an analog-to-digital converter ADC, and a device for generating differentially enhanced images according to the state of the art which comprises a recursive filter $F_1$, a digital-to-analog converter DAC1, and a display device $MON_1$. The X-rays generated by the tube B irradiate an object O in order to form a radiographic shadow image thereof on an entrance screen S of the image intensifier tube II. The reduced and intensified shadow image is converted into an analog video signal *via* an image pick-up tube P.U. which is connected to the output of the image intensifier II. A logarithmic amplifier including a sampling circuit OA amplifies and samples this video signal, after which the sampled signal is digitized by means of an analog-to-digital converter ADC.

The digitized signal is applied to a (digital) recursive filter $F_1$ which comprises the following components: multipliers $M_1$ and $M_2$, an adder $A_1$, a memory $MM_1$ and a subtraction circuit $V_1$. The examination device shown in Figure 1 also includes a digital-to-analog converter $DAC_1$ and a display device $MON_1$ (for example, a television monitor). It will be apparent that the examination device shown in Figure 1 may alternatively include a magnetic tape or disc recording device for video or digital signals, or a copier/printer for forming a more permanent record of the (processed differential) X-ray images. The filter $F_1$ shown is to be considered as a highpass filter.

The recursive filter $F_1$ shown in Figure 1 operates as follows: a digital signal (image information relating to a pixel and which originates from the converter ADC, is applied to the multiplier $M_1$ which multiplies the digital signal by a factor $\alpha(0 \leqslant \alpha \leqslant 1)$. The product is applied to the adder $A_1$ which also receives the value already stored in the memory $MM_1$ for the same pixel, after multiplication of this value by a factor $(1-\alpha)$. The multiplication is performed by the multiplier $M_2$ which connects the output of the memory $MM_1$ to an input of the adder $A_1$. The sum of the two values applied to the adder $A_1$ is stored at the address associated with the relevant pixel. The subtraction circuit $V_1$ receives both the value originating from the converter ADC and the value stored in the memory $MM_1$, so that the difference between the two values is applied to the digital-to-analog converter DAC, in order to be displayed on the monitor $MON_1$.

Figure 2 shows a device for generating differentially enhanced images in accordance with the invention. The signals originating from the amplifier circuit OA (Figure 1) and converted by the analog-to-digital converter ADC are applied to a first recursive filter $F_2$ which may be identical to the filter $F_1$ of Figure 1. The output signals of the filter $F_2$, however, are not applied to the monitor MON via the converter $DAC_2$, but to the input of a recursive filter $F_2'$. The construction of the filter $F_2'$ could be identical to that of the filters $F_1$ and $F_2$ (with the exception of the subtraction circuit $V_1$) but its construction is made simpler in order to perform a low-pass filtering operation. The recursive filter $F_2'$ comprises a subtraction circuit $V_3$, only one multiplier $M_3$, one adder $A_3$ and one memory $MM_3$. The subtraction circuit $V_3$ is connected between the input of the filter $F_2$ and the input of the multiplier $M_3$. The multiplier $M_3$ multiplies the output signal of the subtraction circuit $V_3$ by a factor $\alpha(0 \leqslant \alpha \leqslant 1)$ and applies the product to an adder $A_3$ which also receives a value which is recalled via the output of the memory $MM_3$ and which is associated with the same pixel as the value which is applied to the subtraction circuit $V_3$ and subsequently to the multiplier $M_3$. The value present on the output of the memory $MM_3$ is also applied to a second input of the subtraction circuit $V_3$. The sum formed by the adder $A_3$ is stored at the address associated with the relevant pixel. The output (of the memory $MM_3$) of the second recursive filter $F_2'$, is connected to the digital-to-analog converter $DAC_2$ which converts the digital values presented into analog form for supply to monitor $MON_2$. The extremely low-noise differential image is displayed on the monitor $MON_2$.

The differential image displayed on the monitor $MON_2$ has a high signal-to-noise ratio with respect to the differential image which is formed by means of the device shown in Figure 1 and which is displayed on the monitor $MON_1$. The signal-to-noise ratio is improved because the difference between the last shadow image formed and the weighted sum of the preceding shadow images is not determined directly. In accordance with the invention, the difference is determined between two weighted sums of successive images. The device for generating differentially enhanced images which is shown in Figure 2 forms two weighted sums of images, the second sum being delayed with respect to the first weighted sum; the device utilizes the first weighted sum as an "image" for the second recursive filter in order to determine the second weighted sum.

Figure 3 shows a preferred embodiment of the device for generating differentially enhanced images in accordance with the invention. The signal which originates from the amplifier OA (see Figure 1) and which is digitized by the analog-to-digital converter ADC is applied to inputs of two "parallel connected" recursive filters $F_3$, $F_3'$. Each (low-pass) filter $F_3$, $F_3'$ may be constructed in a similar manner to the filter $F_1$ (Figure 1), with the exception of the circuit $V_1$ or in a similar manner to filter $F_2'$ (Figure 2). The outputs of the filters $F_3$ and $F_3'$ are connected to a further subtraction circuit $V_3$ which applies the difference between the two output signals of the filters $F_3$ and $F_3'$ to the digital-to-analog converter $DAC_3$ whose output is connected to a monitor $MON_3$ for the display of the differential images.

It will be apparent that signals with image information relating to the weighted sum of successive images, will be generated at the outputs of the two filters $F_3$. The signal-to-noise ratio of these signals will be substantially improved as a result of the determination of the weighted sums. The corresponding multiplication factors ($\alpha$, $1-\alpha$) respectively relating to the two filters $F_3$ and $F_3'$ must be different. When this is the case, a differential signal will be generated for those parts of the successive images which change. A very flexible differential image enhancement in time is thus achieved which enables movement in an object (for example, the human heart) to be displayed even when little or no contrast medium is used.

It has been found that the ratio of the multiplication factors $\alpha$ of the filters $F_2$, $F_2'$ and $F_3$, $F_3'$ preferably equal 2 or 4, the multiplier factors ($\alpha$) themselves having the values $\frac{1}{2}$ or $\frac{1}{4}$, because the multiplication (division) of binary digital signals can be performed more easily by a factor $\frac{1}{2}$ or $\frac{1}{4}$ by shifting the binary number 1 and 2 positions further, respectively.

**Claims**

1. A device for the generation of differentially enhanced images, comprising an image-forming device for providing sequences of images which are sub-divided into pixels, a memory for storing image information relating to each pixel, a subtraction circuit for subtracting image information relating to each pixel from predetermined image information relating to a corresponding pixel from a previous image, and a display device for displaying the image information relating to each pixel which is determined via the subtraction circuit, the memory forming, in conjunction with at least one multiplier circuit and one adder circuit, a recursive filter for filtering in the time domain, image information relating to each pixel of images which succeed one another in time, characterized in that the device comprises a second recursive filter which comprises a memory, at least one multiplier and one adder circuit, the differentially enhanced image being formed from the difference between first and second weighted sums of successive images, said first and second sums being stored in the memory of the first and the second recursive filter, respectively.

2. A device as claimed in Claim 1, characterized in that the output of a first recursive filter is connected to the input of the second recursive filter whose output is connected to the display device.

3. A device as claimed in Claim 1, characterized in that the inputs of the recursive filters are interconnected, each of their outputs being connected to an input of a subtraction circuit whose output is connected to the display device, the multiplication factors of the multipliers associated with the various recursive filters being different.

**Revendications**

1. Dispositif pour engendrer des images diférentielles améliorées, comportant un dispositif formateur d'image pour fournir des séries d'images qui sont subdivisées en éléments d'image, une mémoire pour le stockage d'information d'image concernant chaque élément d'image, un circuit de soustraction pour la soustraction d'information d'image concernant chaque élément d'image d'une information d'image prédéterminée concernant un élément d'image correspondant d'une image précédente et un dispositif d'affichage pour la reproduction de l'information d'image concernant chaque élément d'image, qui est déterminé par l'intermédiaire du circuit de soustraction, la mémoire formant, de concert avec au moins un circuit multiplicateur et un circuit additionneur, un filtre récursif pour le filtrage temporel de l'information d'image concernant chaque élément d'image des images se succédant les unes aux autres dans le temps, caractérisé en ce qu'il comprend un deuxième filtre récursif comprenant une mémoire, au moins un multiplicateur et un circuit additionneur, l'image différentielle améliorée étant formé à partir de la différence entre les première et deuxième sommes pondérées d'images successives, lesdites première et deuxième sommes étant stockées respectivement dans la mémoire des premier et deuxième filtres récursifs.

2. Dispositif selon la revendication 1, caractérisé en ce que la sortie d'un premier filtre récursif est connectée à l'entrée du deuxième filtre récursif, dont la sortie est connectée au dispositif d'affichage.

3. Dispositif selon la revendication 1, caractérisé en ce que les entrées des filtres récursifs sont interconnectées, chacune de leurs sorties étant connectée à une entrée d'un circuit de soustraction dont la sortie est connectée au dispositif d'affichage, les facteurs de multiplication des multiplicateurs correspondant aux divers filtres récursifs étant différents.

**Patentansprüche**

1. Einrichtung zur Erzeugung verbesserter Subtraktionsbilder, mit einem Bildformer zum Erzeugen von Bildreihen, die in Bildelemente unterteilt sind, mit einem Speicher zum Speichern von ju jedem Bildelement gehöriger Bildinformation, mit einem Subtrahierer zum Subtrahieren von zu jedem Bildelement gehöriger Bildinformation von einem entsprechenden Bildelement zugeordneter, vorgegebener Bildinformation eines vorangegangenen Bildes, und mit einer Bildwiedergabeanordnung zum Darstellen der jedem Bildelement zugeordneten Bildinformation, die mit Hilfe des Subtrahierers bestimmt wird, wobei der Speicher in Zusammenarbeit mit zumindest einem Vervielfacher und einem Addierer ein Rekursivfilter zum Filtern von Bildinformation bildet, die jedem Bildelement von zeitlich aufeinanderfolgenden Bildern zugeordnet ist, dadurch gekennzeichnet, dass die Einrichtung ein zweites Rekursivfilter enthält, das einen Speicher, zumindest einen Vervielfacher und einen Addierer enthält, wobei das verbesserte Differenzbild aus der Differenz zwischen den ersten und zweiten gewogenen Summen aufeinanderfolgender Bilder geformt wird, wobei die ersten und zweiten Summen in den Speicher des ersten bzw. des zweiten Rekursivfilters eingeschrieben werden.

2. Einrichtung nach Anspruch 1, dadurch gekennzeichnet, das der Ausgang eines ersten Rekursivfilters mit dem Eingang des zweiten Rekursivfilters verbunden ist, dessen Ausgang an die Bildwiedergabeanordnung angeschlossen ist.

3. Einrichtung nach Anspruch 1, dadurch gekennzeichnet, dass die Eingänge der Rekursivfilter miteinander verbunden sind, wobei ein jeder ihrer Ausgänge an einen Eingang eines Subtrahierers angeschlossen ist, dessen Ausgang mit der Bildwiedergabeanordnung in Verbindung steht, wobei die Vervielfachungsfaktoren der Vervielfacher, die den verschiedenen Rekursivfiltern zugeordnet sind verschieden sind.

0 079 661

FIG.1

FIG.2

FIG.3